(19) Europäisches Patentamt
European Patent Office
Office européen des brevets

(11) **EP 4 270 520 A1**

(12) **EUROPEAN PATENT APPLICATION**
published in accordance with Art. 153(4) EPC

(43) Date of publication:
**01.11.2023 Bulletin 2023/44**

(51) International Patent Classification (IPC):
*H01M 4/13* (2010.01)   *H01M 4/131* (2010.01)
*H01M 4/134* (2010.01)   *H01M 4/136* (2010.01)
*H01M 4/36* (2006.01)   *H01M 4/38* (2006.01)
*H01M 4/48* (2010.01)   *H01M 4/505* (2010.01)
*H01M 4/525* (2010.01)   *H01M 4/58* (2010.01)
*H01M 10/052* (2010.01)

(21) Application number: **21910985.7**

(22) Date of filing: **23.12.2021**

(52) Cooperative Patent Classification (CPC):
**H01M 4/13; H01M 4/131; H01M 4/134;
H01M 4/136; H01M 4/36; H01M 4/38; H01M 4/48;
H01M 4/505; H01M 4/525; H01M 4/58;
H01M 10/052;** Y02E 60/10

(86) International application number:
**PCT/JP2021/047964**

(87) International publication number:
**WO 2022/138846 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.12.2020  JP 2020216136**

(71) Applicant: **Panasonic Intellectual Property
Management Co., Ltd.
Osaka-shi, Osaka 540-6207 (JP)**

(72) Inventor: **KAWADA, Hiroshi
Kadoma-shi, Osaka 571-0057 (JP)**

(74) Representative: **Novagraaf International SA
Chemin de l'Echo 3
1213 Onex, Geneva (CH)**

(54) **POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**

(57)    The present invention provides a positive electrode active material which improves the discharge capacity of a battery. This positive electrode active material contains a first lithium metal composite oxide which is represented by general formula $xLi_yM1O_2\text{-}(1\text{-}x)Li_zM1O_2$ (wherein $0<x\leq1$, $1.5\leq y\leq2.5$, $0.9\leq z\leq1.5$, and M1 represents one or more elements that are selected from the group consisting of transition metals, Al, Si, Sn, Ge, Sb, Bi, Mg, Ca and Sr); the first lithium metal composite oxide has a layered structure, while comprising Li element that is coordinated to the position of the oxygen tetrahedron; and the particle diameters of the primary particles are from 0.5 μm to 15 μm.

EP 4 270 520 A1

Figure 1

**Description**

TECHNICAL FIELD

The present disclosure relates to a positive electrode active material for a non-aqueous electrolyte secondary battery, and to a non-aqueous electrolyte secondary battery.

BACKGROUND

In the related art, non-aqueous electrolyte secondary batteries are widely in use in which the battery is charged and discharged by moving Li ions or the like between a positive electrode and a negative electrode. In the recent years, further improvements in battery characteristics are demanded. Patent Literature 1 discloses a secondary battery in which $Li_2NiO_2$ is contained in the positive electrode so as to supply a sufficient amount of Li ions to the negative electrode during charging, so that reduction of a battery capacity is suppressed while realizing an advantage in an over-discharge characteristic.

CITATION LIST

PATENT LITERATURE

PATENT LITERATURE 1: JP 2005-521220 A

SUMMARY

PROBLEM TO BE SOLVED

However, $Li_2NiO_2$ has poor reversibility with regard to absorption and release of Li ions, and there may be cases in which the discharge capacity of the battery is actually reduced by containing $Li_2NiO_2$ in the positive electrode. The technique of Patent Literature 1 does not take into consideration the irreversibility of $Li_2NiO_2$, and thus, there still remains room of improvement.
An advantage of the present disclosure lies in provision of a positive electrode active material with which the discharge capacity of the battery can be improved.

SOLUTION TO PROBLEM

According to one aspect of the present disclosure, there is provided a positive electrode active material for a non-aqueous electrolyte secondary battery, the positive electrode active material including a first lithium-metal composite oxide represented by a general formula $xLi_yM1O_2$-$(1-x)Li_zM1O_2$ (wherein $0<x\leq1$, $1.5\leq y\leq2.5$, $0.9\leq z\leq1.5$, and M1 is one or more elements selected from the group consisting of transition metals, Al, Si, Sn, Ge, Sb, Bi, Mg, Ca, and Sr), wherein the first lithium-metal composite oxide has a layer structure, has a Li element coordinated at a tetrahedral site of oxygen, and has a particle size of primary particles of 0.5~15 $\mu$m.
According to another aspect of the present disclosure, there is provided a non-aqueous electrolyte secondary battery including a positive electrode including the positive electrode active material for the non-aqueous electrolyte secondary battery, a negative electrode, and a non-aqueous electrolyte, wherein the negative electrode includes a negative electrode active material, and the negative electrode active material includes one material or a mixture of two or more materials selected from the group consisting of Si, SiC, $SiO_\alpha$ (wherein $0<\alpha<2$), $Li_\beta SiO_\gamma$ (wherein $1<\beta\leq4$, $1<\gamma\leq4$), Sn, $SnO_2$, Sb, and Ge, in an amount of greater than or equal to 3%.

ADVANTAGEOUS EFFECTS

With the positive electrode active material for the non-aqueous electrolyte secondary battery according to an aspect of the present disclosure, the discharge capacity of the battery can be improved.

BRIEF DESCRIPTION OF DRAWINGS

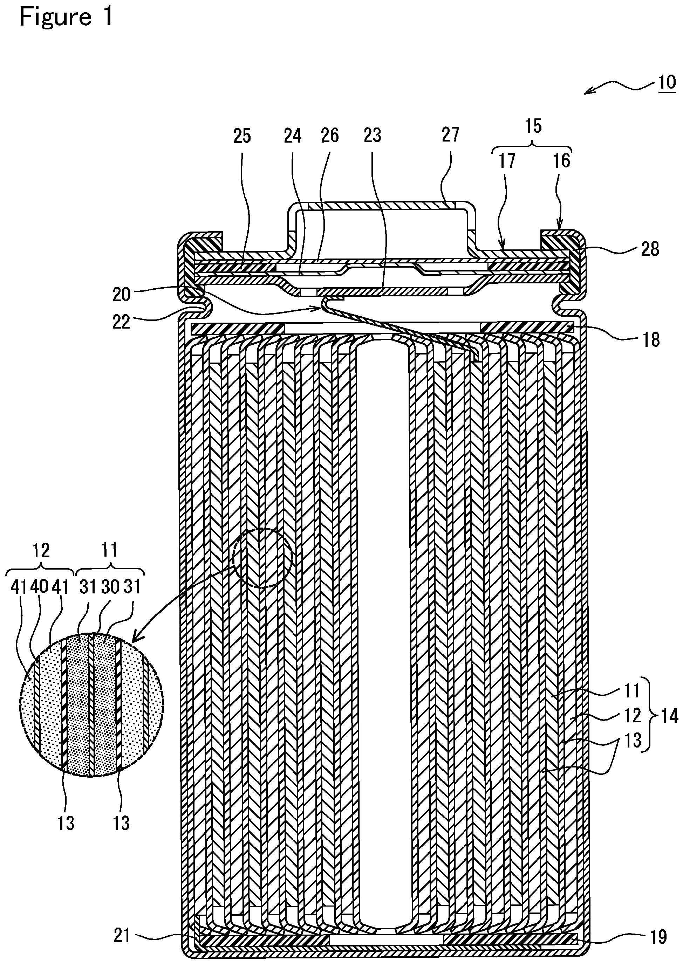

FIG. 1 is a cross-sectional diagram of a non-aqueous electrolyte secondary battery according to an embodiment of the present disclosure.

DESCRIPTION OF EMBODIMENTS

A non-aqueous electrolyte secondary battery is charged and discharged by moving Li ions between a positive electrode and a negative electrode. During charging and discharging of the non-aqueous electrolyte secondary battery, a phenomenon is observed in which a part of the Li ions moved from the positive electrode to the negative electrode during the charging are continued to be absorbed by the negative electrode active material and are not released from the negative electrode during the discharging, resulting in reduction of a capacity maintenance percentage of the battery. This phenomenon is observed also in the case in which a typical carbon-based material such as graphite is used, and is particularly significant when an irreversible material is used such as a Si-based material. In order to suppress the reduction of the capacity maintenance percentage during the charging and discharging, a method is being considered in which $Li_2NiO_2$ is contained in the positive electrode as a Li compensation agent so that Li ions in a sufficient amount are supplied to the negative electrode during the charging. However, $Li_2NiO_2$ has poor reversibility with regard to absorption and release of the Li ions, and there may be cases in which the inclusion of $Li_2NiO_2$ in the positive electrode actually results in reduction of the discharge capacity of the battery.

The present inventors have eagerly reviewed for solving the problem, and found that the discharge capacity of the battery can be specifically improved by using, as the positive electrode active material, a first lithium-metal composite oxide having a particle size of the primary particles of 0.5~15 $\mu$m, having a predetermined composition, and having a predetermined structure. During the charging, when the Li element coordinated at a tetrahedral site of oxygen is supplied to the negative electrode, a volume of the lithium-metal composite oxide largely changes. It can be deduced that, by setting the particle size of the primary particles to a relatively large size of 0.5~15 $\mu$m, cracking of secondary particles can be suppressed, and the discharge capacity can be improved in comparison to the case in which $Li_2NiO_2$ is included in the positive electrode. Moreover, by further including, in the positive electrode active material, a second lithium-metal composite oxide having a larger particle size of the secondary particles than that in the first lithium-metal composite oxide, it is possible to improve a packing density of the positive electrode mixture layer, and to improve a capacity density of the positive electrode.

A non-aqueous electrolyte secondary battery according to an embodiment of the present disclosure will now be described in detail. In the following, a circular cylindrical battery in which an electrode assembly of a wound type is housed in an outer housing of a circular cylindrical shape is exemplified, but the electrode assembly is not limited to the wound type, and may alternatively be of a layered type in which a plurality of positive electrodes and a plurality of negative electrodes are alternately layered one layer by one layer with a separator therebetween. In addition, the outer housing is not limited to the circular cylindrical shape, and may alternatively be of, for example, a polygonal shape, a coin shape, or the like. Alternatively, the outer housing may be a battery casing formed from laminated sheets including a metal layer and a resin layer.

FIG. 1 is a cross-sectional diagram of a non-aqueous electrolyte secondary battery 10 according to an embodiment of the present disclosure. As shown in FIG. 1, the non-aqueous electrolyte secondary battery 10 includes an electrode assembly 14, a non-aqueous electrolyte (not shown), and a battery casing 15 which houses the electrode assembly 14 and the non-aqueous electrolyte. The electrode assembly 14 has a wound type structure in which a positive electrode 11 and a negative electrode 12 are wound with a separator 13 therebetween. The battery casing 15 is formed from an outer housing can 16 having a circular cylindrical shape with a bottom, and a sealing assembly 17 which blocks an opening of the outer housing can 16.

The electrode assembly 14 is formed from the positive electrode 11 of an elongated shape, the negative electrode 12 of an elongated shape, two separators 13 of an elongated shape, a positive electrode tab 20 joined to the positive electrode 11, and a negative electrode tab 21 joined to the negative electrode 12. The negative electrode 12 is formed in a size slightly larger than the positive electrode 11 in order to prevent precipitation of lithium. That is, the negative electrode 12 is formed to be longer in a longitudinal direction and in a width direction (short side direction) than the positive electrode 11. The two separators 13 are formed in a size slightly larger at least than the positive electrode 11, and are placed, for example, to sandwich the positive electrode 11.

The non-aqueous electrolyte secondary battery 10 includes insulating plates 18 and 19 placed respectively above and below the electrode assembly 14. In the illustrated example structure of FIG. 1, the positive electrode tab 20 attached to the positive electrode 11 extends through a through hole of the insulating plate 18 toward the side of the sealing assembly 17, and the negative electrode tab 21 attached to the negative electrode 12 extends to the side of the bottom of the outer housing can 16 through an outer side of the insulating plate 19. The positive electrode tab 20 is connected to a lower surface of a bottom plate 23 of the sealing assembly 17 by welding or the like, and a cap 27 of the sealing assembly 17 electrically connected to the bottom plate 23 serves as a positive electrode terminal. The negative electrode tab 21 is connected to an inner surface of the bottom of the outer housing can 16 by welding or the like, and the outer housing can 16 serves as a negative electrode terminal.

The outer housing can 16 is, for example, a metal container of a circular cylindrical shape with a bottom. A gasket 28 is provided between the outer housing can 16 and the sealing assembly 17, so as to airtightly seal an internal space of the battery casing 15. The outer housing can 16 has a groove portion 22 which is formed, for example, by pressing a side surface portion from an outer side, and which supports the sealing assembly 17. The groove portion 22 is desirably formed in an annular shape along a circumferential direction of the outer housing can 16, and supports the sealing assembly 17 with the upper surface thereof.

The sealing assembly 17 has a structure in which the bottom plate 23, a lower vent member 24, an insulating member 25, an upper vent member 26, and the cap 27 are layered in this order from the side of the electrode assembly 14. The members of the sealing assembly 17 have, for example, a circular disk shape or a ring shape, and members other than the insulating member 25 are electrically connected to each other. The lower vent member 24 and the upper vent member 26 are connected to each other at respective center parts, and the insulating member 25 interposes between peripheral parts of the vent members. When an inner pressure of the battery increases due to abnormal heat generation, the lower vent member 24 deforms to press the upper vent member 26 upward toward the cap 27 and ruptures, and a current path between the lower vent member 24 and the upper vent member 26 is shut out. When the inner pressure further increases, the upper vent member 26 ruptures, and gas is discharged from an opening of the cap 27.

The positive electrode 11, the negative electrode 12, the separator 13, and the non-aqueous electrolyte forming the non-electrolyte secondary battery 10 will now be described in detail. In particular, a positive electrode active material included in a positive electrode mixture layer 31 forming a part of the positive electrode 11 will be described in detail.

[Positive Electrode]

The positive electrode 11 comprises a positive electrode current collector 30, and the positive electrode mixture layer 31 formed over both surfaces of the positive electrode current collector 30. For the positive electrode current collector 30, there may be employed a foil of a metal which is stable within a potential range of the positive electrode 11 such as aluminum and an aluminum alloy, a film on a surface layer of which the metal is placed, or the like. The positive electrode mixture layer 31 may include a positive electrode active material, a conductive agent, and a binder agent. The positive electrode 11 can be produced, for example, by applying a positive electrode mixture slurry including the positive electrode active material, the conductive agent, the binder agent, or the like over a surface of the positive electrode current collector 30, drying the applied film, and compressing the dried film to form the positive electrode mixture layer 31 over both surfaces of the positive electrode current collector 30.

As the conductive agent included in the positive electrode mixture layer 31, there may be exemplified carbon-based materials such as carbon black, acetylene black, Ketjenblack, graphite, or the like. As the binder agent included in the positive electrode mixture layer 31, there may be exemplified a fluororesin such as polytetrafluoroethylene (PTFE), polyvinylidene fluoride (PVdF), polyacrylonitrile (PAN), polyimide, an acrylic resin, polyolefin, or the like. These resins may be used in combination with carboxymethyl cellulose (CMC) or a salt thereof, polyethylene oxide (PEO), or the like.

The positive electrode active material included in the positive electrode mixture layer 31 includes a first lithium-metal composite oxide represented by a general formula $xLi_yM1O_2$-$(1-x)Li_zM1O_2$ (wherein $0<x\leq1$, $1.5\leq y\leq2.5$, $0.9\leq z\leq1.5$, and M1 is one or more elements selected from the group consisting of transition metals, Al, Si, Sn, Ge, Sb, Bi, Mg, Ca, and Sr).

In the general formula $xLi_yM1O_2$-$(1-x)Li_zM1O_2$ representing the first lithium-metal composite oxide, M is desirably one or more elements selected from the group consisting of Ni, Co, Mn, Fe, and Al.

The first lithium-metal composite oxide has a layer structure, and has a Li element coordinated at a tetrahedral site of oxygen within one primary particle. The layer structure of the first lithium-metal composite oxide includes, for example, a transition metal layer, a Li layer, and an oxygen layer. The Li layer is a layer to and from which Li reversibly enters and exits.

The first lithium-metal composite oxide includes a space group R3-m as the predominant group, and may have a region of a space group P3-m1 as a layer defect. By introducing the region of the space group P3-m 1 as the layer defect while employing the space group R3-m as the predominant group, it is possible to improve a discharge capacity. In the general formula $xLi_yM1O_2$-$(1-x)Li_zM1O_2$ representing the first lithium-metal composite oxide, parameters x and (1-x) respectively show ratios of the region of the space group P3-m1 and the region of the space group R3-m. The parameter x satisfies the condition $0<x\leq1$, and, desirably, $0.01\leq x<0.4$. When the value of x is less than 0.4, an average discharge voltage of the battery can be increased.

The value of x in the general formula $xLi_yM1O_2$-$(1-x)Li_zM1O_2$ representing the first lithium-metal composite oxide can be calculated from the following formula based on an accumulated intensity S1 of a range of greater than or equal to 17.1° and less than 18.1°, and an accumulated intensity S2 of a range of greater than or equal to 18.1° and less than 19.1°, measured by XRD measurement of CuKα.

$$x=S1/(S1+S2)$$

The XRD measurement may be performed, for example, under the following conditions using a powder X-ray diffractometer (product name "RINT-TTR" manufactured by Rigaku Corporation, with a radiation source of Cu-Kα).

Measurement range: 15-120°
Scan rate: 4°/min.
Analysis range: 30-120°
Background: B-spline
Profile function: Split pseudo-Voigt function
ICSD No.: 98-009-4814

In a state of being discharged to 1.5 V, the first lithium-metal composite oxide may have a composition represented by a general formula $xLi_yM1O_2$-$(1-x)Li_zM1O_2$ (wherein $0<x\leq1$, $1.5\leq y\leq2.5$, $0.9\leq z\leq1.5$, and M1 is the M1 described above). The composition of the first lithium-metal composite oxide changes with charging and discharging of the battery, but is recovered to the above-described composition when discharged to 1.5 V.

The first lithium-metal composite oxide is, for example, a secondary particle formed by a plurality of primary particles being aggregated. A particle size of the primary particles forming the secondary particle is 0.5~15 μm. By setting the particle size of the primary particles to be relatively large size of 0.5~15 μm, it is possible to suppress cracking of the secondary particles. The particle size of the primary particles is measured as a diameter of a circumscribing circle in a particle image observed by a scanning electron microscope (SEM).

A particle size D1 of the secondary particles of the first lithium-metal composite oxide is, for example, 0.1~30 μm in a volume-based median size (D50). D50 means a particle size at which an accumulation of frequencies in a volume-based particularity distribution reaches 50% from the lower side, and is also called a middle size. The particularity distribution of the first lithium-metal composite oxide can be measured using a particularity distribution measurement apparatus of a laser diffraction type (for example, MT3000II manufactured by MicrotracBEL corporation), and using water as a dispersive medium.

The positive electrode active material may further include a second lithium-metal composite oxide represented by a general formula $Li_wM2O_2$ (wherein $0.2\leq w\leq1.5$, and M2 is one or more elements selected from the group consisting of Ni, Co, Mn, Fe, and Al). Alternatively, the positive electrode active material may include lithium-metal composite oxides other than the first lithium-metal composite oxide and the second lithium-metal composite oxide, or other compounds, within a range of not adversely affecting the advantages of the present disclosure.

The second lithium-metal composite oxide is, for example, a secondary particle formed by a plurality of primary particles being aggregated. A particle size of the primary particles forming the secondary particle is, for example, 0.05~1 μm. A particle size D2 of the secondary particles is, for example, 1~30 μm in a volume-based median size (D50). The particle size of the primary particles and the particle size of the secondary particles of the second lithium-metal composite oxide can be measured in a manner similar to that for the first lithium-metal composite oxide.

A ratio (D1/D2) of a particle size D1 of the secondary particles of the first lithium-metal composite oxide with respect to a particle size D2 of the secondary particles of the second lithium-metal composite oxide desirably satisfies a condition of $0.15<D1/D2<1.0$. With this configuration, the packing density of the positive electrode mixture layer can be improved, and the capacity density of the positive electrode can be improved.

In the positive electrode active material, a ratio of a mass of the first lithium-metal composite oxide with respect to a total mass of the first lithium-metal composite oxide and the second lithium-metal composite oxide is desirably 10~90%, is more desirably 15~50%, and is particularly desirably 20~40%. When the ratio is within these ranges, the capacity density of the positive electrode can be improved in a larger degree.

The first lithium-metal composite oxide can be produced, for example, by immersing a lithium-metal composite oxide (X) having the space group R3-m and Li metal in a benzophenone-2Me-THF solution in which benzophenone is dissolved in 2-methyl tetrahydrofuran (2-MeTHF), stirring for 1~24 hours at the room temperature, and then filtering. With the process described above, the space group P3-m1 is introduced as the layer defect in the lithium-metal composite oxide (X) having the space group R3-m. A ratio of introduction of the space group P3-m1 can be adjusted, for example, by the temperature, the concentration of benzophenone in 2-MeTHF, a stirring time, or the like.

The lithium-metal composite oxide (X) having the space group R3-m can be synthesized, for example, by adding and mixing a Li source to a metal composite compound which does not contain Li, and baking at a temperature of 200°C~1050°C. As the metal composite compound, there may be exemplified oxides, hydroxides, carbonate compounds, or the like, containing Ni, Mn, or the like. As the Li source, there may be exemplified LiOH or the like. For example, by increasing a percentage content of Ni in the metal composite compound, the percentage content of Ni in a lithium-metal composite oxide (Y) can be increased. The metal composite compound can be produced, for example, by thermally treating a hydroxide produced through coprecipitation.

The second lithium-metal composite oxide can be produced in a manner similar to that for the lithium-metal composite oxide (X) having the space group R3-m described above. For example, a precipitation time for producing the coprecipitated product used as a Ni soured or a Mn source for the second lithium-metal composite oxide is set longer, or a baking temperature when the second lithium-metal composite oxide is produced is set to be higher than the baking temperature when the first lithium-metal composite oxide is produced, so that D2 is set to be larger than D1.

[Negative Electrode]

The negative electrode 12 comprises a negative electrode current collector 40 and a negative electrode mixture layer 41 formed over both surfaces of the negative electrode current collector 40. For the negative electrode current collector 40, there may be employed a foil of metal stable within a potential range of the negative electrode 12 such as copper, a copper alloy, or the like, a film on a surface layer of which the metal is placed, or the like. The negative electrode mixture layer 41 may include a negative electrode active material and a binder agent. A thickness of the negative electrode mixture layer 41 is, for example, 10 $\mu$m~150 $\mu$m on one side of the negative electrode current collector 40. The negative electrode 12 can be produced, for example, by applying a negative electrode mixture slurry including the negative electrode active material, the binder agent, or the like over a surface of the negative electrode current collector 40, drying the applied film, and rolling the dried film, to form the negative electrode mixture layer 41 over both surfaces of the negative electrode current collector 40. In a charged state, lithium metal may precipitate on the negative electrode 12.

No particular limitation is imposed on the negative electrode active material included in the negative electrode mixture layer 41 so long as the negative electrode active material can reversibly occlude and release lithium ions, and in general, a carbon-based material such as graphite is used. The graphite may be a natural graphite such as flake graphite, massive graphite, amorphous graphite, or the like, or an artificial graphite such as massive artificial graphite, graphitized meso-phase carbon microbeads, or the like. Alternatively, as the negative electrode active material, there may be employed a metal which forms an alloy with Li such as Si, Sn, or the like, a metal compound including Si, Sn, or the like, or lithium-titanium composite oxide, or the like. Alternatively, materials may be employed in which a carbon coating is formed over these materials. The negative electrode active material desirably contains one material or a mixture or two or more materials selected from the group consisting of Si, SiC, $SiO_\alpha$ (wherein $0<\alpha<2$), $Li_\beta SiO_\gamma$ (wherein $1<\beta\leq4$, $1<\gamma\leq4$), Sn, $SnO_2$, Sb, and Ge, in an amount of greater than or equal to 3%.

As the binder agent included in the negative electrode mixture layer 41, similar to the case of the positive electrode 11, a fluororesin such as PTFE, PVdF, or the like, PAN, polyimide, an acrylic resin, polyolefin, or the like may be employed, but desirably, styrenebutadiene rubber (SBR) is employed. The negative electrode mixture layer 41 may further contain CMC or a salt thereof, polyacrylic acid (PAA) or a salt thereof, polyvinyl alcohol (PVA), or the like.

[Separator]

For the separator 13, for example, a porous sheet having an ion permeability and an insulating property is employed. Specific examples of the porous sheet include a microporous thin film, a woven fabric, a non-woven fabric, or the like. As a material of the separator, there may be exemplified polyolefin such as polyethylene and polypropylene, cellulose, or the like. The separator 13 may have a single-layer structure or a layered structure. Alternatively, a resin layer having a high thermal endurance such as an aramid resin, and a filler layer including a filler of an inorganic compound may be provided over a surface of the separator 13.

[Non-aqueous Electrolyte]

The non-aqueous electrolyte includes, for example, a non-aqueous solvent and an electrolyte salt dissolved in the non-aqueous solvent. For the non-aqueous solvent, for example, esters, ethers, nitriles such as acetonitrile, amides such as dimethylformamide, or a mixture solvent of two or more of these solvents may be employed. The non-aqueous solvent may include a halogen-substituted product in which at least a part of hydrogens of the solvent described above is substituted with a halogen atom such as fluorine. Examples of the halogen-substituted product include a fluorinated cyclic carbonate such as fluoroethylene carbonate (FEC), a fluorinated chain carbonate, or a fluorinated chain carboxylate such as fluoromethyl propionate (FMP).

Examples of the esters include cyclic carbonates such as ethylene carbonate (EC), propylene carbonate (PC), and butylene carbonate, chain carbonates such as dimethyl carbonate (DMC), ethylmethyl carbonate (EMC), diethyl carbonate (DEC), methylpropyl carbonate, ethylpropyl carbonate, and methylisopropyl carbonate, cyclic carboxylates such as $\gamma$-butyrolactone (GBL) and $\gamma$-valerolactone (GVL), and chain carboxylates such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyl tetrahydrofuran, propylene oxide, 1,2-butylene oxide, 1,3-dioxane, 1,4-dioxane, 1,3,5-trioxane, furan, 2-methyl furan, 1,8-cineol, and crown ether, and chain ethers such as 1,2-dimethoxy ethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxy benzene, 1,2-diethoxy ethane, 1,2-dibutoxy ethane, diethylene glycol dimethyl ether, diethylene glycol diethyl ether, diethylene glycol dibutyl ether, 1,1-dimethoxy methane, 1,1-diethoxy ethane, triethylene glycol dimethyl ether, and tetraethylene glycol dimethyl ether.

The electrolyte salt is desirably a lithium salt. Examples of the lithium salt include $LiBF_4$, $LiClO_4$, $LiPF_6$, $LiAsF_6$, $LiSbF_6$, $LiAlCl_4$, LiSCN, $LiCF_3SO_3$, $LiCF_3CO_2$, $Li(P(C_2O_4)F_4)$, $LiPF_{6-x}(C_nF_{2n+1})_x$ (wherein 1<x<6, n is 1 or 2), $LiB_{10}Cl_{10}$, LiCl, LiBr, LiI, lithium chloroborane, lithium lower aliphatic carboxylate, borate salts such as $Li_2B_4O_7$ and $Li(B(C_2O_4)F_2)$, and imide salts such as $LiN(SO_2CF_3)_2$, and $LiN(C_1F_{21+1}SO_2)(C_mF_{2m+1}SO_2)$ (wherein each of 1 and m is an integer greater than or equal to 0). As the lithium salt, these materials may be used as a single material or a mixture of a plurality of these materials may be used. Of these, $LiPF_6$ is desirably used, from the viewpoints of ion conductivity, electrochemical stability, or the like. A concentration of the lithium salt is, for example, 0.8 ~ 1.8 mol per 1 L of the non-aqueous solvent. Further, vinylene carbonate and propane sultone-based additive may be added.

## EXAMPLES

The present disclosure will now be described in further detail with reference to Examples and Comparative Examples. The present disclosure, however, is not limited to the Examples described below.

<Example 1>

[Production of Positive Electrode Active Material]

A nickel-manganese composite hydroxide obtained through coprecipitation and having a composition of $Ni_{0.8}Mn_{0.2}(OH)_2$ was thermally treated at a temperature of 500°C, to obtain a nickel-manganese composite oxide having a composition of $Ni_{0.8}Mn_{0.2}O_2$. Then, the nickel-manganese composite oxide and LiOH were mixed in such a manner that a molar ratio between a total amount of Ni and Mn and Li was 1.02: 1. The mixture was baked for 40 hours at a temperature of 800°C, and was then ground, to obtain a lithium-metal composite oxide (X) having R3-m. The lithium-metal composite oxide (X) had a particle size of the primary particles of 2 $\mu$m and a particle size of the secondary particles of 3.8 $\mu$m.

The lithium-metal composite oxide (X) and a Li metal were immersed in a benzophenone-2Me-THF solution of 1 mol/L, and, after stirring for 12 hours at the room temperature, filtering was performed, to produce a first lithium-metal composite oxide, which was set as a positive electrode active material. As a result of XRD measurement, it was found that x of the positive electrode active material (first lithium-metal composite oxide) was 0.33.

[Production of Positive Electrode]

The positive electrode active material, acetylene black, and polyvinylidene fluoride (PVdF) were mixed with a solid content mass ratio of 96.3:2.5:1.2, a suitable amount of N-methyl-2-pyrrolidone (NMP) was added, and the mixture was kneaded to prepare a positive electrode mixture slurry. The positive electrode mixture slurry was applied over both surfaces of a positive electrode core made of an aluminum foil, the applied film was dried, the dried film was rolled using a roller, and the resulting structure was cut in a predetermined electrode size, to obtain a positive electrode in which a positive electrode mixture layer was formed over both surfaces of the positive electrode core.

[Preparation of Non-aqueous Electrolyte]

A non-aqueous solvent was obtained by mixing fluoroethylene carbonate (FEC), ethylene carbonate (EC), and ethylmethyl carbonate (EMC) in a volume ratio of 1:1:6. $LiPF_6$ was dissolved in the non-aqueous solvent in a concentration of 1.0 mol/L, to obtain a non-aqueous electrolyte.

[Production of Test Cell]

Lead wires were attached to the positive electrode and to a counter electrode made of the Li metal, and the positive electrode and the counter electrode were placed opposing each other with a separator made of polyolefin therebetween, to produce an electrode assembly. The electrode assembly and the non-aqueous electrolyte were sealed in an outer housing formed from an aluminum laminated film, to produce a test cell.

[Measurement of Discharge Capacity]

Under a temperature environment of 25°C, the test cell was charged with a constant current of 0.2C until a cell voltage reached 4.5 V, and then charged with a constant voltage of 4.5 V until a current value reached 0.02C. Then, the test cell was discharged with a constant current of 0.2C until the cell voltage reached 2.5 V. A discharge capacity in this charging/discharging cycle was measured.

<Comparative Example 1>

A test cell was produced in a manner similar to Example 1 except that the baking conditions were changed to 800°C and 10 hours, the particle size of the primary particles of the lithium-metal composite oxide (X) was set to 0.3 $\mu$m, and the particle size of the secondary particles was set to 4.8 $\mu$m in the production of the positive electrode active material, and the test cell was assessed. As a result of the XRD measurement, it was found that x of the positive electrode active material was 0.33.

TABLE 1 shows discharge capacities of Example 1 and Comparative Example 1. TABLE 1 also shows the particle size of the secondary particles and the particle size of the primary particles of the positive electrode active material.

[TABLE 1]

|  | FIRST LITHIUM-METAL COMPOSITE OXIDE | | ASSESSMENT RESULT |
|---|---|---|---|
|  | SECONDARY PARTICLE SIZE [$\mu$m] | PRIMARY PARTICLE SIZE [$\mu$m] | DISCHARGE CAPACITY [mAh/g] |
| EXAMPLE 1 | 3.8 | 2 | 127.4 |
| COMPARATIVE EXAMPLE 1 | 4.8 | 0.3 | 93.8 |

As shown in TABLE 1, it can be understood that the discharge capacity of the test cell of Example 1 is improved in comparison to the test cell of Comparative Example 1.

<Example 2>

A test cell was produced in a manner similar to Example 1 except that the positive electrode active material was produced by mixing the first lithium-metal composite oxide of Example 1 and a second lithium-metal composite oxide separately prepared, having a composition of $LiNi_{0.8}Mn_{0.2}O_2$, and having a particle size of secondary particles of 17.0 $\mu$m in a mass ratio of 30:70 in the production of the positive electrode active material. Using the test cell, in addition to the measurement of the discharge capacity as described above, measurement of a charge capacity density and a discharge capacity density to be described below were performed. A ratio (x) of P3-m1 in the mixed positive electrode as a whole was 0.1.

[Calculation of Charge Capacity Density and Discharge Capacity Density]

In the above-described charging/discharging cycle, a charge capacity was measured in addition to the discharge capacity. In addition, a mass of the positive electrode active material included in the positive electrode mixture layer was divided by a volume of the positive electrode mixture layer, to calculate a density of the positive electrode active material in the positive electrode mixture layer. Based on these values, the charge capacity density and the discharge capacity density were calculated through the following formulae, and were assessed.

Charge capacity density (mAh/cm$^3$) = charge capacity (mAh/g) x (density of positive electrode active material in positive electrode mixture layer) (g/cm$^3$)
Discharge capacity density (mAh/cm$^3$) = discharge capacity (mAh/g) $\times$ (density of positive electrode active material in positive electrode mixture layer) (g/cm$^3$)

<Comparative Example 2>

A test cell was produced in a manner similar to Example 2 except that the positive electrode active material was produced by mixing the first lithium-metal composite oxide of Comparative Example 1 and the second lithium-metal composite oxide in a mass ratio of 30:70 in the production of the positive electrode active material, and the test cell was assessed.

<Referential Example 1>

A test cell was produced in a manner similar to Example 2 except that the second lithium-metal composite oxide was set as the positive electrode active material in the production of the positive electrode active material, and the test cell was assessed.

<Referential Example 2>

A test cell was produced in a manner similar to Example 2 except that the size of the first lithium-metal composite oxide was changed to the particle size of the primary particles of 2 $\mu$m and the particle size of the secondary particles of 4.4 $\mu$m, and the first lithium-metal composite oxide was set as the positive electrode active material in the production of the positive electrode active material, and the test cell was assessed. As a result of the XRD measurement, it was found that x of the positive electrode active material was 0.2.

TABLE 1 shows the charge capacity density and the discharge capacity density for Example 2, Comparative Example 1, and Referential Examples 1 and 2. TABLE 1 also shows the particle size of the secondary particles of the first lithium-metal composite oxide, the particle size of the primary particles, a ratio (x) of P3-m1 in the mixed positive electrode as a whole, a particle size of the secondary particles of the second lithium-metal composite oxide, a mixture ratio of the first lithium-metal composite oxide and the second lithium-metal composite oxide, and the density of the positive electrode active material in the positive electrode mixture layer.

[TABLE 2]

| | FIRST LITHIUM-METAL COMPOSITE OXIDE | | | | SECOND LITHIUM-METAL COMPOSITE OXIDE | | DENSITY OF POSITIVE ELECTRODE ACTIVE MATERIAL IN POSITIVE ELECTRODE MIXTURE LAYER [g/cm$^3$] | ASSESSMENT RESULT | |
|---|---|---|---|---|---|---|---|---|---|
| | SECONDARY PARTICLE SIZE [μm] | PRIMARY PARTICLE SIZE [μm] | MIXTURE RATIO [%] | RATIO OF P3-ml IN ENTIRE MIXED POSITIVE ELECTRODE (x) | SECONDARY PARTICLE SIZE [μm] | MIXTURE RATIO [%] | | CHARGE CAPACITY DENSITY [mAh/cm$^3$] | DISCHARGE CAPACITY DENSITY [mAh/cm$^3$] |
| EXAMPLE 2 | 3.8 | 2 | 30 | 0.1 | 17.0 | 70 | 3.40 | 852 | 668 |
| COMPARATIVE EXAMPLE 2 | 4.8 | 0.3 | 30 | 0.1 | 17.0 | 70 | 3.10 | 789 | 599 |
| REFERENTIAL EXAMPLE 1 | - | - | 0 | - | 17.0 | 100 | 3.15 | 749 | 645 |
| REFERENTIAL EXAMPLE 2 | 4.4 | 2 | 100 | 0.2 | - | 0 | 3.10 | 733 | 627 |

As shown in TABLE 2, it can be understood that the charge capacity density and the discharge capacity density of the test cell of Example 2 were improved in comparison to the test cell of Comparative Example 2. In addition, the test cell of Example 2 had a larger charge capacity density and a larger discharge capacity density even in comparison to the test cells of Referential Examples 1 and 2, formed from only one type of lithium-metal composite oxide.

REFERENCE SIGNS LIST

10 non-aqueous electrolyte secondary battery, 11 positive electrode, 12 negative electrode, 13 separator, 14 electrode assembly, 15 battery casing, 16 outer housing can, 17 sealing assembly, 18, 19 insulating plate, 20 positive electrode tab, 21 negative electrode tab, 22 groove portion, 23 bottom plate, 24 lower vent member, 25 insulating member, 26 upper vent member, 27 cap, 28 gasket, 30 positive electrode current collector, 31 positive electrode mixture layer, 40 negative electrode current collector, 41 negative electrode mixture layer

**Claims**

1. A positive electrode active material for a non-aqueous electrolyte secondary battery, the positive electrode active material comprising:

   a first lithium-metal composite oxide represented by a general formula $xLi_yM1O_2-(1-x)Li_zM1O_2$ (wherein $0<x\leq1$, $1.5\leq y\leq2.5$, $0.9\leq z\leq1.5$, and M1 is one or more elements selected from the group consisting of transition metals, Al, Si, Sn, Ge, Sb, Bi, Mg, Ca, and Sr), wherein
   the first lithium-metal composite oxide has a layer structure, has a Li element coordinated at a tetrahedral site of oxygen, and has a particle size of primary particles of 0.5~15 $\mu$m.

2. The positive electrode active material for the non-aqueous electrolyte secondary battery according to claim 1, wherein the first lithium-metal composite oxide has a space group R3-m as a predominant group, and has a region of a space group P3-m1 as a layer defect.

3. The positive electrode active material for the non-aqueous electrolyte secondary battery according to claim 1 or 2, wherein
   the M1 is one or more elements selected from the group consisting of Ni, Co, Mn, Fe, and Al.

4. The positive electrode active material for the non-aqueous electrolyte secondary battery according to any one of claims 1 to 3, further comprising:
   a second lithium-metal composite oxide represented by a general formula $Li_wM2O_2$ (wherein $0.9\leq w\leq1.5$, and M2 is one or more elements selected from the group consisting of Ni, Co, Mn, Fe, and Al).

5. The positive electrode active material for the non-aqueous electrolyte secondary battery according to claim 4, wherein a ratio (D1/D2) of a particle size D 1 of secondary particles of the first lithium-metal composite oxide with respect to a particle size D2 of secondary particles of the second lithium-metal composite oxide satisfies a condition of $0.15<D1/D2<1.0$.

6. A non-aqueous electrolyte secondary battery comprising:

   a positive electrode including the positive electrode active material for the non-aqueous electrolyte secondary battery according to any one of claims 1 to 5;
   a negative electrode; and
   a non-aqueous electrolyte, wherein
   the negative electrode comprises a negative electrode active material, and
   the negative electrode active material includes one material or a mixture of two or more materials selected from the group consisting of Si, SiC, $SiO_\alpha$ (wherein $0<\alpha<2$), $Li_\beta SiO_\gamma$ (wherein $1<\beta\leq4$, $1<\gamma\leq4$), Sn, $SnO_2$, Sb, and Ge, in an amount of greater than or equal to 3%.

7. The non-aqueous electrolyte secondary battery according to claim 6, wherein lithium metal precipitates on the negative electrode in a charged state.

8. The non-aqueous electrolyte secondary battery according to claim 6 or 7, wherein

in a state of being discharged to 1.5 V, the first lithium-metal composite oxide has a composition represented by a general formula $xLi_yM1O_2$-$(1-x)Li_zM1O_2$ (wherein $0<x\leq1$, $1.5\leq y\leq2.5$, $0.9\leq z\leq1.5$, and M1 is the M1).

# Figure 1

## INTERNATIONAL SEARCH REPORT

International application No.

**PCT/JP2021/047964**

### A. CLASSIFICATION OF SUBJECT MATTER

*H01M 4/13*(2010.01)i; *H01M 4/131*(2010.01)i; *H01M 4/134*(2010.01)i; *H01M 4/136*(2010.01)i; *H01M 4/36*(2006.01)i; *H01M 4/38*(2006.01)i; *H01M 4/48*(2010.01)i; *H01M 4/505*(2010.01)i; *H01M 4/525*(2010.01)i; *H01M 4/58*(2010.01)i; *H01M 10/052*(2010.01)i
FI:   H01M4/525; H01M4/505; H01M4/36 E; H01M4/13; H01M4/131; H01M4/134; H01M4/136; H01M4/38 Z; H01M4/48; H01M4/58; H01M10/052

According to International Patent Classification (IPC) or to both national classification and IPC

### B. FIELDS SEARCHED

Minimum documentation searched (classification system followed by classification symbols)

H01M4/13; H01M4/131; H01M4/134; H01M4/136; H01M4/36; H01M4/38; H01M4/48; H01M4/505; H01M4/525; H01M4/58; H01M10/052

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2012-142156 A (SONY CORP) 26 July 2012 (2012-07-26) | 1-3, 6-8 |
|   | paragraphs [0026]-[0027], [0148], table 1 | |
| Y | | 4-8 |
| Y | WO 2020/026486 A1 (PANASONIC INTELLECTUAL PROPERTY MANAGEMENT CO., LTD.) 06 February 2020 (2020-02-06) | 4-8 |
|   | paragraphs [0029]-[0030] | |
| A | | 1-3 |
| A | JP 10-158017 A (SHARP CORP) 16 June 1998 (1998-06-16) | 1-8 |
|   | paragraphs [0013]-[0028] | |
| A | JP 2016-199414 A (ASAHI GLASS CO LTD) 01 December 2016 (2016-12-01) | 1-8 |
|   | paragraphs [0020]-[0021] | |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 March 2022** | **29 March 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
**Information on patent family members**

International application No.

**PCT/JP2021/047964**

| Patent document cited in search report | | | Publication date (day/month/year) | Patent family member(s) | | | Publication date (day/month/year) |
|---|---|---|---|---|---|---|---|
| JP | 2012-142156 | A | 26 July 2012 | US 2012/0164533 A1 paragraphs [0030]-[0031], [0152], table 1 CN 102569878 A | | | |
| WO | 2020/026486 | A1 | 06 February 2020 | CN 112313817 A | | | |
| JP | 10-158017 | A | 16 June 1998 | US 5955219 A column 3, line 21 to column 6, line 14 EP 845436 A1 | | | |
| JP | 2016-199414 | A | 01 December 2016 | US 2016/0301065 A1 paragraphs [0047]-[0048] CN 106058236 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005521220 A